# EUROPEAN PATENT APPLICATION

(11) **EP 4 730 447 A1**
(43) Date of publication of application: **22.04.2026**
(21) Application number: 25208117.9
(22) Date of filing: 10.10.2025
(51) Int. Cl.: H01M 8/04089, H01M 8/04082, H01M 8/04664, H01M 8/04746

(54) **FUEL CELL SYSTEM**

(30) Priority: 18.10.2024 JP 2024184127
(71) Applicant: Honda Motor Co., Ltd., Toyko 105-8404 (JP)
(72) Inventor: FUKUSHIMA, Yukihiro, Saitama, 351-0193 (JP); TOMIZAWA, Tai, Saitama, 351-0193 (JP)
(74) Representative: Weickmann & Weickmann PartmbB

(57) **Abstract**

A fuel cell system (100) includes a plurality of fuel cells (101), a fuel gas storage unit (2) storing a fuel gas, a valve device (25) disposed between a fuel gas supply flow path (PA1) of each of the plurality of fuel cells (101) and the fuel gas storage unit (2) and configured to permit or shut off a flow of the fuel gas through the fuel gas supply flow path (PA1), and a control unit (102) configured to open the valve device (25) in response to a valve-open command output from the each of the plurality of fuel cells (101). The control unit (102) is configured to open the valve device (25) when the valve-open command is output from at least one of the plurality of fuel cells (101), under a condition that all of the plurality of fuel cells (101) are normal.

## Description

### BACKGROUND OF THE INVENTION

### Field of the Invention

This invention relates to a fuel cell system including a plurality of fuel cells.

### Description of the Related Art

In recent years, technological developments have been made on a fuel cell that contribute to energy efficiency in order to ensure access to energy that is affordable, reliable, sustainable and advanced by more people. As a technology relating to this type of fuel cell, a technique for starting a fuel cell system including a plurality of fuel cells is known. Such a system is described, for example, in Japanese Examined Patent Publication No. 6973173 (JP6973173B).

The fuel cell system described in JP6973173B includes a plurality of control units that individually control a plurality of fuel cells, and an integrated control unit that executes the opening of a shut-off valve of a high-pressure tank in which fuel gas is stored. The integrated control unit opens the shut-off valve after receiving opening instructions from all control units if it is determined that there are no abnormalities in the plurality of fuel cells. Conversely, it opens the shut-off valve after receiving an opening instruction from at least one of the plurality of control units if it is determined that there is an abnormality in at least one of the plurality of fuel cells.

However, in the system described in JP6973173B, if it is determined that there are no abnormalities in the plurality of fuel cells, the shut-off valve is opened after opening instructions have been issued from all of the plurality of control units. Consequently, it tends to take time before the fuel cells commence power generation.

### SUMMARY OF THE INVENTION

An aspect of the present invention is a fuel cell system including: a plurality of fuel cells; a fuel gas storage unit storing a fuel gas; a valve device disposed between a fuel gas supply flow path of each of the plurality of fuel cells and the fuel gas storage unit, and configured to permit or shut off a flow of the fuel gas through the fuel gas supply flow path; and a control unit configured to open the valve device in response to a valve-open command output from the each of the plurality of fuel cells. The control unit is configured to open the valve device when the valve-open command is output from at least one of the plurality of fuel cells, under a condition that all of the plurality of fuel cells are normal.

### BRIEF DESCRIPTION OF THE DRAWINGS

The objects, features, and advantages of the present invention will become clearer from the following description of embodiments in relation to the attached drawings, in which:
FIG. 1 is a diagram schematically illustrating a main configuration of a fuel cell system according to an embodiment of the present invention;
FIG. 2 is a block diagram schematically illustrating a control configuration of the fuel cell system according to the embodiment of the present invention;
FIG. 3 is a flowchart illustrating an example of a processing performed by an individual controller in FIG. 2; and
FIG. 4 is a flowchart illustrating an example of a processing performed by a central controller in FIG. 2

### DETAILED DESCRIPTION OF THE INVENTION

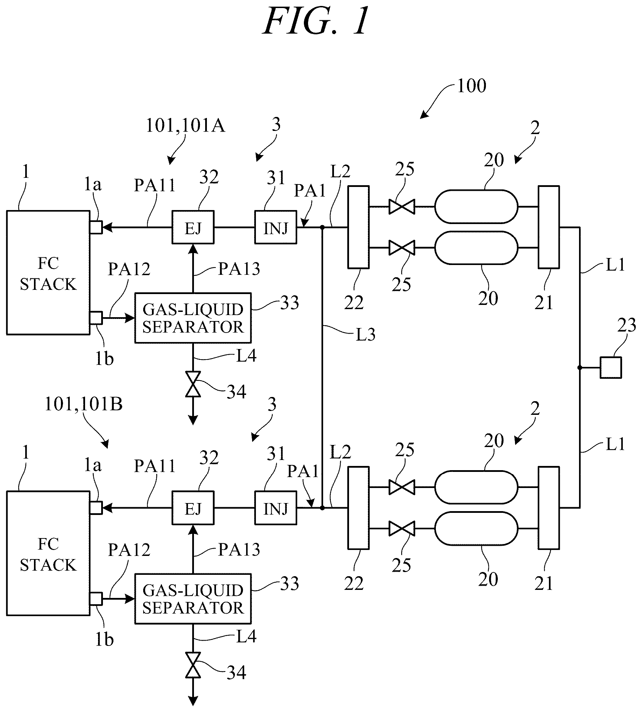

Hereinafter, an embodiment of the present invention will be described with reference to FIGs. 1 to 4. The fuel cell system according to an embodiment of the present invention includes a plurality of fuel cells. This fuel cell system can be installed in large fuel cell vehicles, such as fuel cell buses. Hereinafter, each of the plurality of fuel cells may be referred to as a unit system. By having a plurality of unit systems, the fuel cell system can increase the overall power generation capacity, thereby supplying sufficient power to a travel motor of a large fuel cell vehicle.

The fuel cell system according to the embodiment of the present invention is characterized by a configuration for controlling the flow of fuel gas when supplying fuel gas from a fuel gas tank, in which the fuel gas is stored, to a plurality of unit systems. FIG. 1 is a diagram schematically illustrating a main configuration of the fuel cell system 100 according to the embodiment of the present invention. FIG. 1 mainly illustrates a fuel gas supply flow path.

As illustrated in FIG. 1, the fuel cell system 100 includes a plurality of unit systems 101 (101A and 101B). For convenience, FIG. 1 illustrates an example where the fuel cell system 100 has a pair of unit systems 101A and 101B. However, the fuel cell system 100 may have three or more unit systems 101. The configuration of the plurality of unit systems 101A and 101B is identical to each other.

The unit system 101 includes a fuel cell stack 1, a fuel gas storage unit 2 in which fuel gas is stored, and a fuel gas supply unit 3 that supplies fuel gas from the fuel gas storage unit 2 to the fuel cell stack 1. The fuel gas is, for example, hydrogen.

The fuel gas supply unit 3 has a fuel gas flow path forming part that forms a fuel gas supply flow path PA1 for supplying fuel gas from the fuel gas storage unit 2 to the fuel cell stack 1. Although not shown, the unit system 101 further includes an oxidant gas flow path forming part that forms an oxidant gas supply flow path for supplying oxidant gas to the fuel cell stack 1, and a cooling medium flow path forming part that forms a cooling medium supply flow path for supplying cooling medium to the fuel cell stack 1. The oxidant gas is, for example, oxygen, and the cooling medium is, for example, water.

The fuel cell stack 1 is configured by stacking a plurality of power generation cells. The power generation cell includes an electrolyte membrane, an anode separator disposed to face one surface of the electrolyte membrane, and a cathode separator disposed to face the other surface of the electrolyte membrane. The electrolyte membrane is, for example, a solid polymer electrolyte membrane. An anode electrode is formed on one surface of the electrolyte membrane, and a fuel gas is supplied to an anode flow path between the anode separator and the anode electrode. A cathode electrode is formed on the other surface of the electrolyte membrane, and an oxidant gas is supplied to the cathode flow path between the cathode separator and the cathode electrode. The anode separator and the cathode separator positioned between a pair of adjacent power generation cells are integrally formed, and a cooling medium flows between these anode separator and cathode separator.

In the anode electrode, the fuel gas (hydrogen) supplied to the anode flow path is ionized by an action of a catalyst, passes through the electrolyte membrane, and moves to the cathode electrode side. Electrons generated at this time pass through an external circuit and are extracted as electric energy. In the cathode electrode, the oxidant gas (oxygen) supplied to the cathode flow path reacts with hydrogen ions guided from the anode electrode and electrons moved from the anode electrode to generate water. The generated water gives an appropriate humidity to the electrolyte membrane, and excess water is discharged to an outside.

The fuel gas storage unit 2 includes a plurality (e.g., a pair) of fuel gas tanks 20 connected in parallel. The number of the fuel gas tanks 20 may be one or three or more. The gas inlet portions of the plurality of fuel gas tanks 20 are connected to filling manifolds 21. The filling manifolds 21 of the plurality of unit systems 101A and 101B are connected to a filling port 23 via flow paths L1. The gas outlet portions of the plurality of fuel gas tanks 20 are connected to supply manifolds 22 via electromagnetic shut-off valves (solenoid valves) 25. The supply manifolds 22 of the plurality of unit systems 101A and 101B are connected to the fuel gas supply units 3 via flow paths L2. Furthermore, the supply manifolds 22 of the plurality of unit systems 101A and 101B are connected to each other via a connecting flow path L3.

With the shut-off valve 25 closed, fuel gas is supplied to the fuel gas storage unit 2 from an external source (e.g., a hydrogen station) via the filling port 23. The supplied fuel gas is evenly distributed to the plurality of fuel gas tanks 20 via the flow paths L1 and the filling manifolds 21, where high-pressure fuel gas is stored within the plurality of fuel gas tanks 20.

The fuel cell stack 1 has an inlet port 1a and an outlet port 1b. The fuel gas supply flow path PA1 is a flow path from the fuel gas tanks 20 to the inlet port 1a, and includes a supply flow path PA11 provided between the connecting flow path L3 and the inlet port 1a, a discharge flow path PA12 connected to the outlet port 1b, and a circulation flow path PA13 provided from the discharge flow path PA12 to the supply flow path PA11. An electromagnetic injector 31 which injects fuel gas is disposed in the supply flow path PA11. Although not shown, the injector 31 includes a plurality of injectors connected in parallel. Furthermore, an ejector 32 is disposed between the injector 31 and the inlet port 1a in the supply flow path PA11.

A gas-liquid separator 33 is connected to the end of discharge flow path PA12 to separate moisture from the fuel gas (fuel exhaust gas) discharged from the outlet port 1b. Water separated by gas-liquid separator 33 is discharged externally via a flow path L4 and a drain valve 34. The gas-liquid separator 33 and ejector 32 are connected via the circulation flow path PA13.

The ejector 32 includes a nozzle portion, a suction portion, a confluence portion, and a diffuser portion. The fuel gas ejected from the injector 31 passes through the small-diameter nozzle portion, and flows into the diffuser portion via the confluence portion. At this time, the fuel gas separated from liquid by the gas-liquid separator 33 is drawn into the ejector 32 via the circulation flow path PA13 and the suction portion. The drawn-in fuel gas merges with the fuel gas that has passed through the nozzle portion at the confluence portion, rendered into a uniform flow within the diffuser portion, and then is supplied to the fuel cell stack 1 via the inlet port 1a.

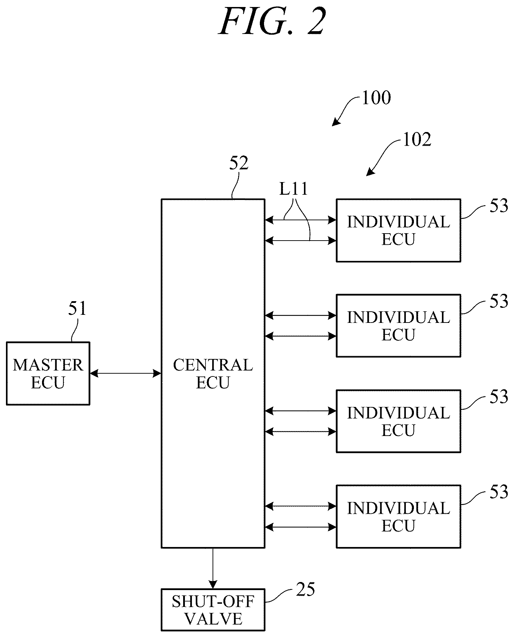

FIG. 2 is a block diagram schematically illustrating a control configuration of the fuel cell system 100 according to the present embodiment. As illustrated in FIG. 2, the fuel cell system 100 includes: a master controller (a master ECU) 51; a central controller (a central ECU) 52; and a plurality of individual controllers (individual ECUs) 53. Each of the controllers 51 to 53 includes a computer including a CPU, a ROM, a RAM, and a peripheral circuit. The central controller 52 and the plurality of individual controllers 53 will be collectively referred to as a control unit (an electronic control unit) 102, in some cases.

The master controller 51 and the central controller 52 are communicably connected with each other, and the central controller 52 and the individual controller 53 are communicably connected with each other. In particular, the central controller 52 and the individual controller 53 are communicably connected with each other through a pair of communication lines L11 and L11 using a communication protocol such as CAN. Since the network is duplicated, redundancy is high, and the continuity of communication between the central controller 52 and the individual controller 53 is easily maintained.

The individual controller 53 is included in the unit system 101, and the individual controllers 53 are provided as many as the plurality of unit systems 101. Unlike FIG. 1, FIG. 2 illustrates an example in which the fuel cell system 100 includes four unit systems 101. Therefore, the fuel cell system 100 includes four individual controllers 53. The number of the individual controllers 53 may not be necessarily four, as long as it is plural.

The fuel cell system 100 according to the present embodiment is mounted on a vehicle. The master controller 51 calculates a power generation amount (a required power generation amount) required by the vehicle, that is, an entire required power generation amount required for the fuel cell system 100. More specifically, the master controller 51 calculates target drive torque of the travel motor, based on a signal from an accelerator opening sensor, which detects an opening degree of the accelerator pedal, and calculates the required power generation amount necessary for the travel motor to generate the target drive torque. Alternatively, the master controller 51 calculates the required power generation amount, based on a signal from a battery sensor, which detects a remaining capacity SOC (State of Charge) of the battery, so that the remaining capacity of the battery has a predetermined value.

The central controller 52 determines a power generation amount (an individual required power generation amount) for every unit system in accordance with the required power generation amount. More specifically, the central controller 52 determines the presence or absence of an abnormality (a failure) of the unit system 101, based on a signal from the individual controller 53, and determines the individual required power generation amount, based on a determination result. For example, in a case where an abnormality occurs in a single unit system 101 among four unit systems 101, the individual required power generation amount is determined so that the remaining (three) unit systems 101 in which no abnormality occurs share the required power generation amount. Furthermore, the central controller 52 estimates the degree of degradation of the unit system 101, based on a signal from the individual controller 53, and determines the individual required power generation amount, based on an estimation result. Specifically, the individual required power generation amount is determined so that the unit system 101 having a small degree of degradation (high in efficiency) generates the power on a priority basis.

The individual controller 53 determines the presence or absence of an abnormality of the unit system 101, and also estimates the degree of degradation of the unit system 101, based on signals from a temperature sensor, a pressure sensor, and the like for detecting the temperature and pressure of the fuel gas supply flow path PA1, the oxidant gas supply flow path, the cooling medium supply flow path, and the like. Then, the individual controller 53 transmits a determination result of the presence or absence of the abnormality and an estimation result of the degree of degradation to the central controller 52. Furthermore, the individual controller 53 controls the injector 31 and the like so that the fuel cell stack 1 generates the power in accordance with the individual required power generation amount, based on a command from the central controller 52.

The central controller 52 outputs a control signal to the plurality of shut-off valves 25 in response to a command from the individual controller 53, and simultaneously opens or closes the plurality of shut-off valves 25. More specifically, the central controller 52 opens the plurality of shut-off valves 25 when a hydrogen holding request is output from the individual controller 53 upon the startup of the fuel cell system 100.

After the master controller 51 starts by turning on, for example, an ignition switch of the driver's seat, the central controller 52 is activated upon receipt of an activation signal (an activation command) from the master controller 51. Then, after having been activated, the central controller 52 transmits the activation signal (the activation command) to the individual controller 53. Thus, the individual controller 53 is activated. On the other hand, when the ignition switch is turned off, the central controller 52 transmits a stop signal (a stop command) to the individual controller 53.

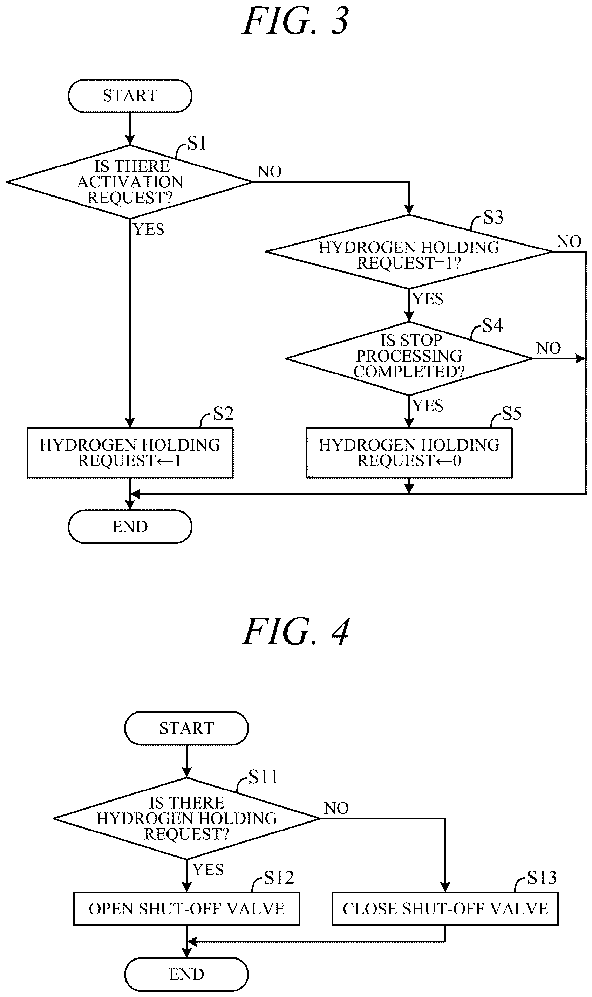

FIG. 3 is a flowchart illustrating an example of processing relating to a hydrogen holding request performed by each of the individual controllers 53. The processing illustrated in this flowchart is started, when an activation signal is transmitted from the central controller 52 to the individual controller 53, and is repeated at a predetermined cycle until a stop signal is output to the individual controller 53. The central controller 52 is continuously transmitting the activation signal to the individual controller 53 until receiving an abnormality signal transmitted from the individual controller 53, when the abnormality (the failure) occurs in the individual controller 53. In this manner, the activation state of the individual controller 53 is maintained. In the initial state immediately after the start of the processing of FIG. 3, zero is set in a hydrogen holding request flag.

First, in S1 (S: processing step), the CPU determines whether an activation signal is output from the central controller 52, that is, whether there is an activation request. In a case where the abnormality signal is not transmitted from the individual controller 53, the activation request is continuously output from the central controller 52. In this case, an affirmative determination is made in S1, and the processing proceeds to S2. In S2, the CPU sets 1 to the hydrogen holding request flag, and outputs the hydrogen holding request. Then, the CPU transmits the hydrogen holding request to the central controller 52.

On the other hand, when an abnormality signal is transmitted from the individual controller 53 and thus a negative determination is made in S1, the processing proceeds to S3, and the CPU determines whether 1 is set in the hydrogen holding request flag. When an affirmative determination is made in S3, the processing proceeds to S4, and when a negative determination is made in S3, the processing ends. In S4, the CPU determines whether the stop processing of the fuel cell is completed. In a case where an abnormality is detected in the unit system 101, the CPU performs the stop processing. In the stop processing, the CPU controls valves for the fuel gas, the oxidant gas, and the cooling medium at predetermined timings, consumes the fuel gas remaining in the fuel cell stack, and then stops the power generation in the fuel cell stack 1. Furthermore, the oxidant gas is forcibly made to flow into the fuel cell stack by the driving of an air pump or the like, and moisture remaining in the fuel cell stack is removed.

When an affirmative determination is made in S4, the processing proceeds to S5, and when a negative determination is made, the processing ends. In S5, the CPU sets 0 to the hydrogen holding request flag, and stops outputting the hydrogen holding request. This stops the transmission of the hydrogen holding request to the central controller 52.

In a case where the central controller 52 and the individual controller 53 are not capable of communicating with each other due to, for example, the occurrence of an abnormality in both of the pair of communication lines L11 and L11, it is impossible to transmit an abnormality signal from the individual controller 53 to the central controller 52. In this case, the central controller 52 regards that there is no output of the hydrogen holding request from the individual controller 53. On the other hand, in a case where an abnormality occurs in one of the pair of communication lines L11 and L11, the central controller 52 and the individual controller 53 are capable of communicating with each other in the other communication line. In this case, the individual controller 53 transmits the hydrogen holding request to the central controller 52.

The operation at the time when the individual controller 53 is activated will be described more specifically. In a case where no abnormality occurs in the unit system 101, the individual controller 53 receives the activation signal, and then transmits the hydrogen holding request to the central controller 52 (S2). On the other hand, a failure that allows the usual stop processing (the processing using fuel gas) to be performed occurs in the unit system 101, and then in a case where it is impossible to generate the power in the unit system 101, the individual controller 53 starts the stop processing, and also transmits an abnormality signal indicating that it is impossible to generate the power to the central controller 52. Upon receipt of the abnormality signal, the central controller 52 stops transmission of the activation signal to the individual controller 53. Accordingly, after the stop processing is completed, the individual controller 53 stops transmission of the hydrogen holding request to the central controller 52 (S5).

On the other hand, in a case where it is impossible to perform the usual stop processing due to hydrogen leakage in the fuel cell stack 1 or the like, the individual controller 53 performs stop processing (an emergency stop) that is different from the usual stop processing. In this case, the individual controller 53 stops the unit system 101 in a shorter time than usual, and then stops the transmission of the hydrogen holding request to the central controller 52.

FIG. 4 is a flowchart illustrating an example of processing performed by the CPU of the central controller 52, particularly, an example of processing related to opening of the shut-off valve 25 upon the startup of the fuel cell system 100. After the activation processing of the central controller 52 is completed, the processing illustrated in this flowchart is started, and is repeated at a predetermined cycle. In an initial state before the processing of FIG. 4 starts, the shut-off valve 25 is closed.

In S11 of FIG. 4, the CPU determines whether a hydrogen holding request has been received from at least one of the plurality of individual controllers 53. When an affirmative determination is made in S11, the processing proceeds to S12, and the CPU outputs a control signal to the plurality of shut-off valves 25 to simultaneously open the plurality of shut-off valves 25. On the other hand, when a negative determination is made in S11, the processing proceeds to S13, and the CPU outputs a control signal to close the plurality of shut-off valves 25.

Main operation of the fuel cell system 100 according to the present embodiment is summarized as follows. When the ignition switch of the vehicle is turned on, the master controller 51 starts, and then the central controller 52 starts the activation processing in accordance with a command from the master controller 51. After the activation processing is completed, the central controller 52 transmits an activation signal to the plurality of individual controllers 53. Upon receipt of the activation signal, the individual controller 53 determines the presence or absence of abnormality in the unit system 101. When no abnormality is determined, that is, when the hydrogen holding request is not received from any of the plurality of individual controllers 53, the individual controller 53 transmits the hydrogen holding request to the central controller 52 (S2).

Upon receipt of the hydrogen holding request from at least one of the plurality of individual controllers 53, the central controller 52 simultaneously opens the plurality of shut-off valves 25 (S12). This enables the fuel gas to be supplied from the fuel gas storage unit 2 to the fuel gas supply unit 3. In this state, when the injector 31 is driven by a command from the individual controller 53, the fuel gas is supplied to the fuel cell stack 1 through the fuel gas supply flow path PA1, and the power generation is started.

In this case, even though an abnormality is occurring in any of the plurality of unit systems 101, unless the abnormality is occurring in all of the plurality of unit systems 101, the hydrogen holding request is output to the central controller 52, and thus the shut-off valve 25 is opened. Therefore, it becomes possible to generate the power using the fuel cell satisfactorily. In addition, the time when the plurality of individual controllers 53 complete the activation processing varies. For this reason, after the activation, the timing when the hydrogen holding request flag is output also varies. In this regard, in a case where all of the unit systems 101 are normal, the central controller 52 commands the shut-off valve 25 to open at the time of receiving the hydrogen holding request from the individual controller 53 that has been activated first. This enables the fuel gas to be supplied to the fuel cell stack 1 early, and enables early start of the power generation of the fuel cell.

On the other hand, if the output of the hydrogen holding request from all of the individual controllers 53 is waited for and then the shut-off valve 25 is opened, the timing of opening the shut-off valve 25 will be delayed, and it tends to take time for the fuel cell to start the power generation.

According to the present embodiment, the following operations and effects can be achieved.
(1) The fuel cell system 100 includes: the plurality of unit systems (the fuel cells) 101; the fuel gas storage unit 2, in which the fuel gas is stored; the shut-off valve 25, which is disposed between the fuel gas supply flow path PA1 in each of the plurality of unit systems 101 and the fuel gas storage unit 2 (in particular, the fuel gas tank 20), and which allows or blocks the flow of the fuel gas through the fuel gas supply flow path PA1; and the control unit 102, which opens the shut-off valve 25 in response to the valve open command, that is, the hydrogen holding request output from each of the plurality of unit systems 101 (FIGS. 1 and 2). In a case where all of the plurality of unit systems 101 are normal, and when the hydrogen holding request is output from at least one of the plurality of unit systems 101, the control unit 102 (particularly, the central controller 52) opens the shut-off valve 25. This enables the shut-off valve 25 to be opened early upon the startup of the fuel cell system 100, so that the power generation in the fuel cell system 100 including the plurality of fuel cells (the unit systems 101) can be started early.
(2) The control unit 102 includes: the central controller 52, which determines a required power generation amount required for each of the plurality of unit systems 101; and the plurality of individual controllers 53, which individual control the plurality of unit systems 101 respectively to generate the power in accordance with the required power generation amount determined by the central controller 52 (FIG. 2). The central controller 52 determines whether the hydrogen holding request has been output from the plurality of individual controllers 53, and opens the shut-off valve 25 (FIG. 4) when the hydrogen holding request is output from at least one of the plurality of individual controllers 53, in a case where all of the plurality of unit systems 101 are normal. This enables the central controller 52 to collect the hydrogen holding requests output from the plurality of individual controllers 53, so that the processing load can be reduced.
(3) Even though one or more of the plurality of unit systems 101 is abnormal, when the hydrogen holding request is output from at least one of the plurality of individual controllers 53, the central controller 52 opens the shut-off valve 25 (FIG. 4). Accordingly, even though there is an abnormality in any of the plurality of unit systems 101, it becomes possible to start the power generation.
(4) Each of the plurality of individual controllers 53 is communicably connected to the central controller 52 through the pair of communication lines L11, and is configured for the hydrogen holding request to be output from each of the plurality of individual controllers 53 through each of the pair of communication lines L11. In this manner, even in a case where an abnormality occurs in one of the pair of communication lines L11, it becomes possible to output the hydrogen holding request through the other one of the communication lines L11.
(5) When an abnormality occurs in both of the pair of communication lines L11, the central controller 52 determines that the hydrogen holding request is not output from the individual controller 53, which is connected to the pair of communication lines L11 in which the abnormality occurs. Accordingly, even in a case where the individual controller 53 that is not capable of communicating with the central controller 52 is present, the central controller 52 receives the hydrogen holding request that has been output from another individual controller 53, so that the shut-off valve 25 can be opened to start the power generation.

The above embodiments can be modified into various forms. Hereinafter, some modifications will be described. In the above embodiment, an electromagnetic shut-off valve 25 is disposed between the fuel gas tank 20 and the supply manifold 22, and by opening or closing the shut-off valve 25, the flow of fuel gas through the fuel gas supply flow path PA1 is permitted or shut off. However, the configuration of a valve device is not limited to the above configuration. Furthermore, as long as the valve device is disposed in the fuel gas supply flow path extending from the fuel gas storage unit 2 (fuel gas tank 20) to a plurality of fuel cells, it may be disposed at other locations.

In the above embodiment, the control unit 102 is configured by the central controller 52 and the individual controllers 53, and the central controller 52 (a central control unit) instructs the opening of the shut-off valve 25 in response to the hydrogen holding request (a valve open command) output from each of the plurality of fuel cells (unit systems 101). However, the configuration of an electronic control unit is not limited to the above configuration. For example, among the plurality of individual controllers 53 (individual control units), a specific individual controller 53 may be configured to function as the central controller 52.

In the above embodiment, the central controller 52 determines the individual required power generation amount such that the required power generation amount required by the master controller 51 is shared among the normal unit systems 101. In this case, the individual required power generation amount may be determined so that all of the plurality of normal unit systems 101 perform power generation, or may be determined so that only a part of the unit systems 101 perform power generation. In the above embodiment, an abnormality signal is output from the unit system 101 under failure. However, when the unit system 101 under failure can perform power generation in response to a command from the central controller 52, the abnormality signal may not be output from the failed unit system 101. That is, even if the unit system 101 is under failure, depending on the mode of the failure, the failed unit system 101 may be treated in the same manner as a normal unit system 101 so as to perform power generation.

In the above embodiment, when an open command is output from at least one of the plurality of fuel cells (unit systems 101), the control unit 102 caused the plurality of shut-off valves 25 to be opened simultaneously. That is, regardless of whether all of the plurality of fuel cells are normal, the open command is made to be output. However, the control unit 102 may be configured to output the open command on condition that all of the plurality of fuel cells are normal. Furthermore, when all of the plurality of fuel cells are abnormal, the control unit 102 may be configured not to output the open command even if an opening command is output from at least one of the plurality of fuel cells.

In the above embodiment, an example of applying the fuel cell system 100 to a fuel cell vehicle is described. However, the fuel cell system of the present invention can also be applied to various movable bodies having a plurality of fuel cells, and can also be applied to non-movable bodies.

The above embodiment can be combined as desired with one or more of the above modifications. The modifications can also be combined with one another.

According to the present invention, power generation of the fuel cell can be started at an early stage.

Above, while the present invention has been described with reference to the preferred embodiments thereof, it will be understood, by those skilled in the art, that various changes and modifications may be made thereto without departing from the scope of the appended claims.

## Claims

1. A fuel cell system comprising:
a plurality of fuel cells (101);
a fuel gas storage unit storing a fuel gas (2);
a valve device (25) disposed between a fuel gas supply flow path (PA1) of each of the plurality of fuel cells (101) and the fuel gas storage unit (2), and configured to permit or shut off a flow of the fuel gas through the fuel gas supply flow path (PA1); and
a control unit (102) configured to open the valve device (25) in response to a valve-open command output from the each of the plurality of fuel cells (101), wherein
the control unit (102) is configured to open the valve device (25) when the valve-open command is output from at least one of the plurality of fuel cells (101), under a condition that all of the plurality of fuel cells (101) are normal.

2. The fuel cell system according to claim 1, wherein
the control unit (102) includes
a central control unit (52) configured to determine an individual required power generation amount required for the each of the plurality of fuel cells (101), and
a plurality of individual control units (53) each configured to individually control the each of the plurality of fuel cells (101) to perform power generation according to the individual required power generation amount determined by the central control unit (52), and
the central control unit (52) is configured to determine whether the valve-open command is output from each of the plurality of individual control units (53), and to open the valve device (25) when it is determined that the valve-open command is output from at least one of the plurality of individual control units (53), under the condition that all of the plurality of fuel cells (101) are normal.

3. The fuel cell system according to claim 2, wherein
the central control unit (25) is configured to open the valve device (25) when the valve-open command is output from at least one of the plurality of individual control units (53), even if one or more of the plurality of fuel cells (101) is abnormal.

4. The fuel cell system according to claim 2 or 3, wherein
the each of the plurality of individual control units (53) is communicably connected to the central control unit (52) through a plurality of communication lines (L11), and to output the valve-open command from the each of the plurality of individual control units (53) through each of the plurality of communication lines (L11).

5. The fuel cell system according to claim 4, wherein
the central control unit (52) is configured to determine that when failures occur in all of the plurality of communication lines (L11), the valve-open command is not output from an individual control unit (53) connected to the plurality of communication lines (L11) where the failures occur.

6. The fuel cell system according to any one of claims 1 to 5, wherein
the fuel gas storage unit (2) includes a plurality of fuel gas storage units (2), and
the valve device (25) includes a plurality of valve devices (25) disposed between the fuel gas supply flow path (PA1) of the each of the plurality of fuel cells (101) and the plurality of fuel gas storage units (2).

7. The fuel cell system according to claim 6, wherein
the control unit (102) is configured to simultaneously open the plurality of valve devices (25) when the valve-open command is output from at least one of the plurality of fuel cells (101), under the condition that all of the plurality of fuel cells (101) are normal.

8. The fuel cell system according to any one of claims 2 to 5, further comprising
a master control unit (51) configured to calculate a total required power generation amount required for the fuel cell system (100), wherein
the central control unit (52) is configured to start upon receiving an activation command from the master control unit (51) after the master control unit (51) has started, to transmit an activation signal to the plurality of individual control units (53), and to determine whether abnormalities occur in the plurality of fuel cells (101) based on signals from the plurality of individual control units (53).
